# EUROPÄISCHE PATENTSCHRIFT

(11) **EP 1 129 305 B1**
(45) Veröffentlichungstag und Bekanntmachung des Hinweises auf die Patenterteilung: **01.09.2004**
(21) Anmeldenummer: 99970847.2
(22) Anmeldetag: 05.11.1999
(51) Int. Cl.: F16D 57/04

(54) **HYDRODYNAMISCHE BREMSE**
HYDRODYNAMIC BRAKE
FREIN HYDRODYNAMIQUE

(30) Priorität: 11.11.1998 DE 19851951
(43) Veröffentlichungstag der Anmeldung: 05.09.2001
(73) Patentinhaber: ZF FRIEDRICHSHAFEN Aktiengesellschaft, 88038 Friedrichshafen (DE)
(72) Erfinder: BOSS, Franz, D-88079 Kressbronn (DE); GRUPP, Bernhard, D-88250 Weingarten (DE)
(86) Internationale Anmeldenummer: PCT/EP1999/008461
(87) Internationale Veröffentlichungsnummer: WO 2000/029759

(56) Entgegenhaltungen:
- DE-A- 1 600 024
- DE-B- 2 605 229
- FR-A- 2 056 273
- US-A- 5 228 544

## Beschreibung

Die vorliegende Erfindung betrifft eine hydrodynamische Bremse, mit einem Motor und mit einem Stator, die jeweils in einem Torusraum angeordnet sind und die zur Verminderung von Ventilationsverlusten im Leerlaufbetrieb mit einem beweglichen Strömungshindernis versehen ist, nach den Oberbegriffen der Ansprüche 1 und 2.

Bremsen dieser Art, die auch als Retarder bezeichnet werden, haben den Vorzug, die abzubremsende Energie ohne Verschleiss in Wärme umzuwandeln. Ein besonderes Problem ist jedoch die Verlustleistung im Leerlauf, die trotz entleertem Arbeitsraum der Bremse in Folge der Luftzirkulation und anderer Einflüsse noch störend sein kann.

Es ist bekannt, im Leerlaufzustand Strömungshindernisse, wie z. B. Blenden, zwischen dem Stator und dem Rotor, die jeweils mit Schaufelkränzen versehen sind, anzuordnen, um die Zirkulation von Luft und ggf. restlichem Strömungsmittel zu verhindern.

Die DE PS 26 05 229 beschreibt eine hydrodynamische Bremse, die eine Vorrichtung zur Verhinderung von Ventilationsverlusten bei nicht gefüllter Bremse aufweist. Dabei wird ein elastisch federnder Ring mit etwa rechteckförmigen Querschnitt verwendet, der im Bremsbetrieb hinter die Toruskontur zurückgezogen wird und im Leerlaufbetrieb in den Spalt zwischen Statortorus und Rotortorus hineinragt. Die Verschiebung in eine radial äussere und eine radial innere Endstellung erfolgt dabei über eine Kniehebelanordnung, die von einem Druckkolben betätigt wird. Obwohl diese Vorrichtung relativ einfach im Aufbau ist, hat sie sich nicht durchgesetzt, weil die Breite des elastisch federnden Ringes stark begrenzt ist und damit die Reduzierung der Verluste im Leerlaufbetrieb nicht ausreicht.

Aus der DE OS 40 28 128 ist eine hydrodynamische Bremse bekannt, bei der zur Verhinderung der Ventilationsverluste eine den gemeinsamen Torusraum verkleinernde ortsveränderliche Trennwand vorgesehen ist, die einen radial nach innen ragenden ringförmigen Schenkel aufweist und einen in axialer Richtung sich erstreckenden zylinderförmigen Schenkel aufweist, wobei die beiden Endstellungen der Trennwand durch einen Betätigungseinrichtung erzielbar sind. Die erforderliche Elastizität zwischen dem äusseren und dem inneren Anschlag der einstückigen Trennwand und die dadurch bedingte Durchmesserdifferenz in den beiden Stellungen werden über am Umfang der Trennwand verteilte Schlitze erzielt, die im nach innen ragenden ringförmigen Schenkel angeordnet sind; die Betätigungseinrichtung für die Trennwand besteht aus einer Kolben-Zylinder-Einheit mit zwei entgegengesetzt zueinander wirkenden Kolben, die über Federn in ihre Mittelstellung gedrückt werden. Der zwischen den beiden Kolben bestehende Raum wird als Druckraum genutzt und ist über einen Kanal mit einer Druckmittelquelle verbunden. Bei Beaufschlagung der beiden Kolben mit dem Druckfluid wird die Trennwand aufgrund der in ihr ausgebildeten Schlitze radial aufgeweitet und nimmt somit ihre die Strömung in der Bremse nicht beeinflussende Stellung ein, in der das in die Bremse eingeleitete Fluid, d. h. ein Öl den Bremsbetrieb ermöglicht.

Die winkelförmige Ausgestaltung der das Strömungshindernis darstellenden Trennwand gewährleistet eine gute Führung und exakte Anschläge in der radial äusseren und radial inneren Endstellung. Aufgrund des Vorsehens eines abgewinkelten Ringes und der Vielzahl von exakt anzubringender, die Elastizität sicherstellender Schlitze, besteht jedoch noch ein erheblicher Bauaufwand.

Schließlich ist aus der DE-A-1 600 024 eine hydraulische Maschine entsprechend dem Oberbegriff von Anspruch 1 bekannt, die als eine hydrodynamische Bremse ausgebildet ein Strömungshindernis aufweist, das ein glattes Ringsegment umfasst, von dem ein Ende an einer Drehachse in der Nähe der Torusinnenwand gelenkig befestigt ist und das mit einer Verstelleinrichtung verbunden ist, die ein Verschwenken des Ringsegmentes in Richtung Torusinnenwand bei ölgefüllter Bremse bzw. in Richtung Längsachse der Bremse bei ölentleerter Bremse ermöglicht. Auch hier ist der Bauaufwand erheblich.

Aufgabe der vorliegenden Erfindung ist es, eine hydrodynamische Bremse zu schaffen, die einen besonders einfachen Aufbau zur Reduzierung der Strömungsverluste aufweist.

Ausgehend von einer Bremse der eingangs näher genannten Art, erfolgt die Lösung dieser Aufgabe mit den in den kennzeichnenden Teilen der Ansprüche 1 und 4 gegebenen Merkmalen.

Die Erfindung sieht also vor, dass das Strömungshindernis als ein- oder mehrteiliges glattes Ringsegment ausgebildet ist, wobei jeweils ein Ende eines jeden Ringsegmentes an einer Drehachse in der Nähe der Torusinnenwand gelenkig befestigt ist das jeweils andere Ende eines jeden Ringsegmentes mit einer Verstelleinrichtung verbunden ist, die ein Verschwenken in Richtung Torusinnenwand bei ölgefüllter Bremse bzw. in Richtung Längsachse der Bremse bei ölentleerter Bremse ermöglicht.

Anstelle eines einteiligen, durch Schlitze elastisch ausgebildeten Ringes mit L-förmigem Querschnitt werden also ein oder mehrere teilringförmige glatte Ringsegmente mit ebenem Querschnitt verwendet, die als Stauscheiben wirken und deren jeweils eines Ende aufgrund ihrer gelenkigen Befestigung an einer Drehachse sowohl im eingeschalteten als auch im ausgegeschalteten Zustand der hydrodynamische Bremse die gleiche Stellung einnimmt und deren jeweils anderes Ende durch die Verstelleinrichtung entsprechend dem eingeschalteten oder ausgeschalteten Zustand der Bremse verschwenkt wird. Dadurch ist eine Anpassung an unterschiedliche Bremsen je nach dem zugehörigen Getriebetyp möglich, wobei auch die Form eines jeden Ringsegmentes entsprechend den Anforderungen variabel gestaltet werden kann.

Im folgenden wird die Erfindung anhand der Zeichnung näher erläutert, in der vorteilhafte Ausführungsbeispiele dargestellt sind.
Es zeigen:
- Fig. 1: einen schematischen Querschnitt durch eine erfindungsgemäss ausgestaltete hydrodynamische Bremse,
- Fig. 2: einen um 90° dazu versetzten Schnitt durch die Bremse mit zwei unterschiedlichen Ringsegmenten,
- Fig. 3: einen um 90° zu Fig. 1 versetzten Schnitt durch die Bremse mit zwei gleichen Ringsegmenten und
- Fig. 4: einen um 90° zu Fig. 1 versetzten Schnitt durch die Bremse mit einem Ringsegment.

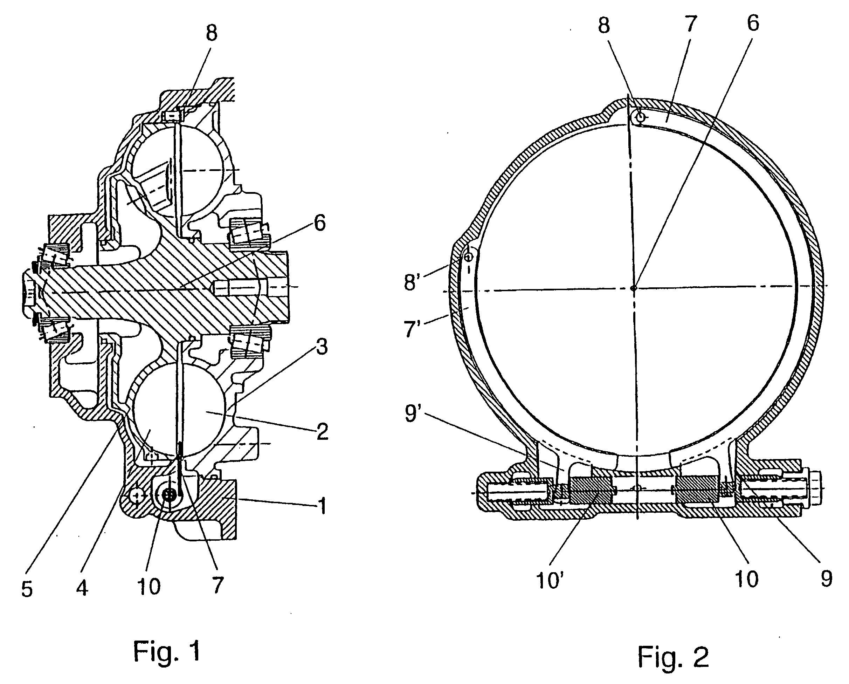

Da hydrodynamische Bremsen der eingangs näher genannten Art dem Fachmann geläufig sind, sind in den Figuren nur die zum Verständnis der Erfindung wesentlichen Teile mit Bezugszeichen versehen. In Fig. 1 ist mit 1 das Retardergehäuse bezeichnet, in dem ein mit einer Getriebeabtriebswelle verbundener Rotor 3 und ein feststehender Stator 5 angeordnet sind, wobei Rotor und Stator in üblicher Weise mit Schaufelkränzen versehen sind. Mit 4 ist der Torusraum des Rotors und mit 2 der Torusraum des Stators bezeichnet.

Die erfindungsgemässe Ausgestaltung der hydrodynamischen Bremse mit einem oder mehreren glatten, d. h. nicht abgewinkelten Ringsegmenten 7 eignet sich insbesondere für sogenannte Sekundär-Retarder, die einen erhöhten Bremsmomentverlauf aufweisen und dadurch ohne Vorsehen eines Strömungshindernisses erhöhte Leerlaufverluste aufweisen würden. Durch das Vorsehen des Strömungshindernisses kann durch eine nachhaltige Störung des Strömungskreislaufs der Luft in der entleerten hydrodynamischen Bremse eine Verlustreduzierung um ca. 90 % erreicht werden. Zu diesem Zweck ist das Strömungshindernis 7, wie die Fig. 2 bis 4 erkennen lassen, als ein- oder mehrteilges Ringsegment 7, 7' ausgeführt, wobei in Fig. 2 zwei Ringsegmente unterschiedlicher Länge in der Bremse eingesetzt sind.

Bei diesem Ausführungsbeispiel ist das eine Ende des Ringsegmentes 4 an einer Drehachse 8 in der Nähe der Torusinnenwand angelenkt, während das andere Ende des Ringsegmentes 7 über einen Mitnehmer 9 mit einem verstellbaren Kolben 10 verbunden ist, der für ein Verschwenken des mit dem Mitnehmer 9 versehenen Endes des Ringsegmentes 7 sorgt. Das Ringsegment 7 ist hierbei im wesentlichen halbkreisförmig ausgestaltet. Ein zweites, etwa viertelkreisförmig ausgestaltetes Ringsegment 7' ist an einer Drehachse 8' in der Nähe der Innenwand des Torus gelenkig befestigt und über einen Mitnehmer 9' mit einem zweiten verstellbaren Kolben 10' verbunden.

Die Verstelleinrichtungen 10, 10' sind von herkömmlicher Weise und z. B. federbelastet, so dass die Ringsegmente 7, 7' bei ausgeschalteter hydrodynamischer Bremse in Richtung Längsachse 6 der Bremse verschoben werden und bei eingeschalteter Bremse durch entsprechende Beaufschlagung der beiden Kolben 10, 10', die sich voneinander weg entfernen, wie es in Fig. 2 dargestellt ist, in Richtung Torusinnenwand verschoben werden, sodass sie bei ölgefüllter Bremse kein Strömungshindernis darstellen.

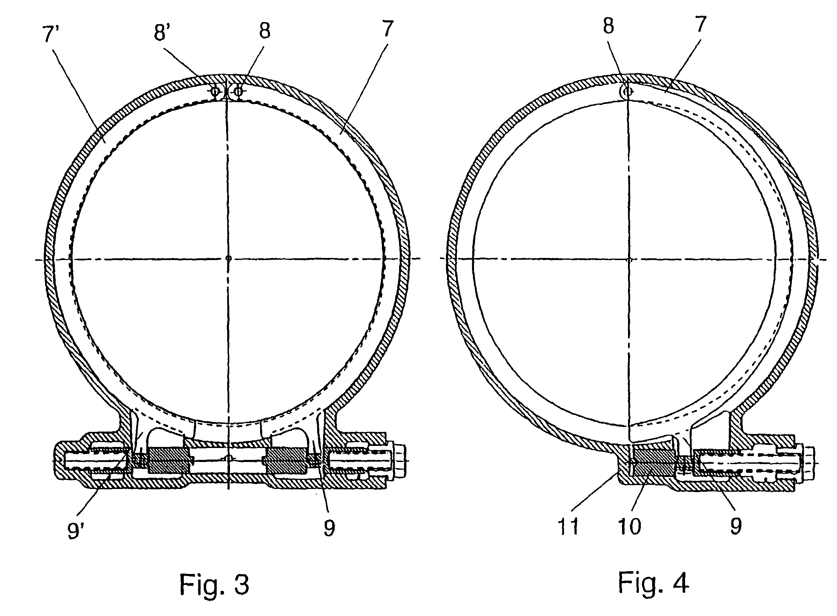

Bei dem in Fig. 3 dargestellten Ausführungsbeispiel sind zwei im wesentlichen halbkreisförmige Ringsegmente 7, 7' vorgesehen, die jeweils an einer Drehachse 8, 8' mit einem Ende gelenkig angeordnet sind, sodass sie um diese Drehachse und entgegengesetzt zueinander verschwenkbar sind mit Hilfe der beiden verstellbaren Kolben, die über die Mitnehmer 9, 9' mit den Ringsegmenten verbunden sind. Auch hier sind die beiden Ringsegmente 7, 7' in ihrer an die Torusinnenwand angenäherten Stellung eingezeichnet, d. h. dass die beiden Kolben durch Druckbeaufschlagung in herkömmlicher Weise voneinander entfernt worden sind.

Fig. 4 zeigt ein Ausführungsbeispiel mit nur einem Ringsegment 7, das ebenfalls an eine Drehachse 8 mit einem Ende angelenkt ist, während das andere Ende über den Mitnehmer 9 mit dem verstellbaren Kolben 10 verbunden ist. Dieser befindet sich bei diesem Ausführungsbeispiel in derjenigen Stellung, d. h. in der Nähe eines Anschlages 11, in der das ringförmige Segment 2 bei ölentleerter hydrodynamischer Bremse in Richtung der Längsachse 6 der Bremse verschwenkt worden ist. Es ist klar, dass bei diesem Ausführungsbeispiel nur ein verstellbarer Kolben 10 erforderlich ist.

Die erfindungsgemässe Ausgestaltung eignet sich nicht nur für hydrodynamische Bremsen, sondern auch für hydrodynamische Strömungsmaschinen, Drehmomentwandler, Verdichter und dergleichen.

### Bezugszeichen

- 1: Gehäuse
- 2: Torusraum
- 3: Rotor
- 4: Torusraum
- 5: Stator
- 6: Längsachse
- 7: Strömungshindernis
- 8: Drehachse
- 9: Mitnehmer
- 10: Kolben
- 11: Anschlag

## Patentansprüche

1. Hydrodynamische Bremse mit einem Rotor (3) und einem Stator (5), die jeweils in einem Torusraum (2, 4) angeordnet sind, und die zur Verminderung von Ventilationsverlusten im Leerlaufbetrieb mit einem beweglichen Strömungshindernis (7) versehen ist, das als Trennwand ausgebildet ist, die sich in radialer Richtung von der Torusinnenwand her in Richtung der Längsachse der Bremse erstreckt und ein glattes Ringsegment umfasst, das an einem Ende an einer Drehachse (8) in der Nähe der Torusinnenwand gelenkig befestigt ist, und das mit einer Verstelleinrichtung (10) verbunden ist, die ein Verschwenken des Ringsegmentes in Richtung Torusinnenwand bei ölgefüllter Bremse bzw. in Richtung Längsachse der Bremse bei ölentleerter Bremse ermöglicht, **dadurch gekennzeichnet, dass** das Strömungshindernis nur ein im wesentlichen halbkreisförmiges Ringsegment (7) aufweist, das an einem Ende über einen Mitnehmer (9) mit einem federbelasteten, verstellbaren Kolben (10) verbunden ist.

2. Hydrodynamische Bremse mit einem Rotor (3) und einem Stator (5), die jeweils in einem Torusraum (2, 4) angeordnet sind, und die zur Verminderung von Ventilationsverlusten im Leerlaufbetrieb mit einem beweglichen Strömungshindernis (7, 7') versehen ist, das als Trennwand ausgebildet ist, die sich in radialer Richtung von der Torusinnenwand her in Richtung der Längsachse der Bremse erstreckt und ein glattes Ringsegment umfasst, das an einem Ende an einer Drehachse (8, 8') in der Nähe der Torusinnenwand gelenkig befestigt ist, und das mit einer Verstelleinrichtung (10, 10') verbunden ist, die ein Verschwenken des Ringsegmentes in Richtung Torusinnenwand bei ölgefüllter Bremse bzw. in Richtung Längsachse der Bremse bei ölentleerter Bremse ermöglicht, **dadurch gekennzeichnet, dass** das Strömungshindernis ein im wesentlichen halbkreisförmiges Ringsegment (7) und ein im wesentlichen viertelkreisförmiges Ringsegment (7') aufweist, die an jeweils einem Ende über einen Mitnehmer (9, 9') mit je einem verstellbaren Kolben (10, 10') verbunden sind, wobei die beiden Kolben (10, 10') gegensinnig zueinander angeordnet sind.

## Claims

1. Hydrodynamic brake with a rotor (3) and a stator (5), each of which is disposed in a toroidal space (2, 4), which brake is provided with a mobile flow obstruction (7) to reduce ventilation losses during no-load operation, the obstruction being formed as a partition which extends in the radial direction from the inner wall of the torus in the direction of the longitudinal axis of the brake and comprises a smooth ring segment which is articulated at one end to a swivel pin (8) in the vicinity of the inner wall of the torus and which is connected to an adjustment device (10) which enables the ring segment to be pivoted in the direction of the inner wall of the torus when the brake is filled with oil and in the direction of the longitudinal axis of the brake when the brake is emptied of oil, **characterised in that** the flow obstruction only has one substantially semicircular ring segment (7) which is connected at one end by means of a driver (9) to a springloaded, adjustable piston (10).

2. Hydrodynamic brake with a rotor (3) and a stator (5), each of which is disposed in a toroidal space (2, 4), which brake is provided with a mobile flow obstruction (7, 7') to reduce ventilation losses during no-load operation, the obstruction being formed as a partition which extends in the radial direction from the inner wall of the torus in the direction of the longitudinal axis of the brake and comprises a smooth ring segment which is articulated at one end to a swivel pin (8, 8') in the vicinity of the inner wall of the torus and which is connected to an adjustment device (10, 10') which enables the ring segment to be pivoted in the direction of the inner wall of the torus when the brake is filled with oil and in the direction of the longitudinal axis of the brake when the brake is emptied of oil, **characterised in that** the flow obstruction has one substantially semicircular ring segment (7) and one substantially quadrantal ring segment (7'), which segments are connected at one end in each case by means of a driver (9, 9') to a respective adjustable piston (10, 10'), wherein the two pistons (10, 10') are disposed in opposite directions to one another.

## Revendications

1. Frein hydrodynamique avec un rotor (3) et un stator (5) disposés chacun dans une chambre torique (2, 4) et qui, pour éviter les pertes de ventilations dans le fonctionnement à vide, est pourvu d'un obstacle d'écoulement mobile (7) agencé comme une cloison, qui s'étend, dans la direction radiale, de la paroi interne du tore vers l'axe longitudinal du frein et qui comprend un segment annulaire lisse fixé de manière articulée, au niveau d'une extrémité, à un axe de rotation (8) à proximité de la paroi interne du tore, et relié à un dispositif de réglage (10) qui permet un pivotement du segment annulaire en direction de la paroi interne du tore lorsque le frein est rempli d'huile ou en direction de l'axe longitudinal du frein lorsque le frein est vidé de son huile, **caractérisé en ce que** l'obstacle d'écoulement comporte seulement un segment annulaire (7) de forme sensiblement semi-circulaire relié, au niveau d'une extrémité, à un piston (10) réglable pourvu d'un ressort par l'intermédiaire d'un taquet (9).

2. Frein hydrodynamique avec un rotor (3) et un stator (5) disposés chacun dans une chambre torique (2, 4) et qui, pour éviter les pertes de ventilations dans le fonctionnement à vide, est pourvu d'un obstacle d'écoulement mobile (7, 7') agencé comme une cloison, qui s'étend, dans la direction radiale, de la paroi interne du tore vers l'axe longitudinal du frein et qui comprend un segment annulaire lisse fixé de manière articulée, au niveau d'une extrémité, à un axe de rotation (8, 8') à proximité de la paroi interne du tore, et relié à un dispositif de réglage (10, 10') qui permet un pivotement du segment annulaire en direction de la paroi interne du tore lorsque le frein est rempli d'huile ou en direction de l'axe longitudinal du frein lorsque le frein est vidé de son huile, **caractérisé en ce que** l'obstacle d'écoulement comporte un segment annulaire (7) de forme sensiblement semi-circulaire et un segment annulaire (7') ayant sensiblement la forme d'un quart de cercle reliés au niveau d'une extrémité, par l'intermédiaire d'un taquet (9, 9') chacun à un piston (10, 10') réglable, les deux pistons (10, 10') étant disposés dans le sens inverse l'un par rapport à l'autre.
